# EUROPÄISCHE PATENTSCHRIFT

(11) **EP 0 589 139 B1**
(45) Veröffentlichungstag und Bekanntmachung des Hinweises auf die Patenterteilung: **03.01.1996**
(21) Anmeldenummer: 93106604.7
(22) Anmeldetag: 23.04.1993
(51) Int. Cl.: E04H 6/24, E04H 6/36, B65G 1/04

(54) **Doppelpalettensystem für Lager**
Double palette system for storehouse
Système à double niveaux palettes pour entrepôt

(30) Priorität: 29.06.1992 DE 4221339
(43) Veröffentlichungstag der Anmeldung: 30.03.1994
(73) Patentinhaber: Noell GmbH, D-97080 Würzburg (DE)
(72) Erfinder: Grünager, Gerhart, Dr., W-8751 Heimbuchenthal (DE); Miller, Michael, W-8700 Würzburg (DE); Weis, Otto, W-8702 Oberpleichfeld (DE)
(74) Vertreter: Lüdtke, Frank

(56) Entgegenhaltungen:
- DE-U- 9 215 874
- FR-A- 1 160 793
- FR-A- 1 287 189

## Beschreibung

Die Erfindung betrifft ein Doppelpalettensystem zum Verteilen und Lagern von Gütern, wie Fahrzeuge, Container oder dergleichen in Lagern, insbesondere von Kraftfahrzeugen in Parkhäusern, mit zwei übereinander vorgesehenen Führungsebenen für die Horizontalverschiebung der Paletten, wobei die obere Führungsebene für mit einem Fördergut bestückte Paletten und die untere Führungsebene für Leerpaletten vorgesehen ist. Ein solches Doppelpalettensystem ist aus der FR-A-1 287 189 bekannt.

Der Erfindung liegt die Aufgabe zugrunde, ein Doppelpalettensystem der vorliegenden Art, wie es in vielzähligen Ausführungen bekannt ist, in einer Gestaltung zu schaffen, die sich durch eine kompakte, wenig Platz beanspruchende Bauweise auszeichnet und die in der Lage ist, Paletten von der Leerpalettenebene in die Ebene für mit einem Fördergut bestückte Paletten zu versetzen.

Die Aufgabe wird erfindungsgemäß dadurch gelöst, das die jeweils zwei übereinander vorgesehene Führungsebenen bildende Profilschiene schwenkbar gelagert ist und daß unterhalb der Paletten eine Hubvorrichtung vorgesehen ist.

Vorteilhafte Weiterbildungen der Erfindung bestehen darin, das an den in Richtung Lager befindlichen Enden der Profilschienen ein verstärkter Bereich eines Rolltores vorgesehen ist, der über Roll- oder Gleitelemente in einer verstärkten Senkrechtführung gelagert ist, und der sich über die Höhe der Palettenanordnung hinaus erstreckt.

Im Folgenden wird anhand der Zeichnung ein Ausführungsbeispiel der Erfindung beschrieben:

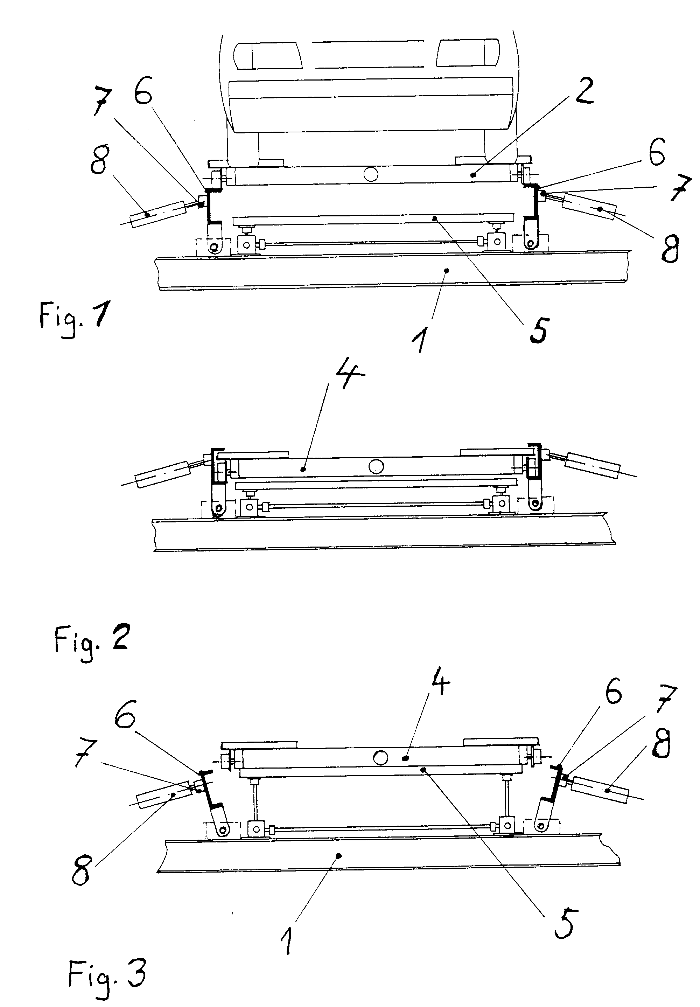

Es zeigen
- Fig. 1: ein Doppelpalettensystem in Vorderansicht mit einer beladenen oberen Palette,
- Fig. 2: das Doppelpalettensystem gemäß Fig. 1, ohne die beladene obere Palette, jedoch mit einer unbeladenen unteren Palette,
- Fig. 3: das Doppelpalettensystem gemäß Fig. 2, wobei die in der unteren Führungsebene befindliche Palette in die obere Führungsebene versetzt wird,

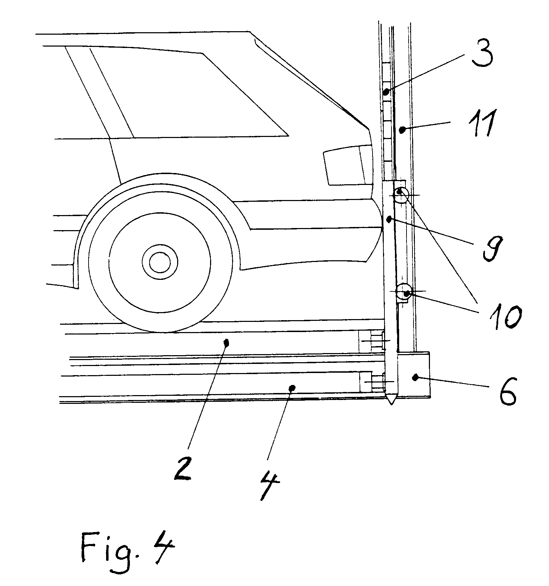

- Fig. 4: einen vergrößerten Ausschnitt eines Doppelpalettensystems mit dem verstärkten Bereich eines Rolltores.

Mit 1 ist der Boden eines Übernahmeraumes in einem Parkhaus bezeichnet, auf dem das erfindungsgemäße Doppelpalettensystem angeordnet ist. Nach Befahren einer in einer oberen Führungsebene gelagerten Palette 2 mit einem Pkw, wird diese Palette mit einer nicht dargestellten Palettenverschiebeeinrichtung bei einem geöffneten Innentor 3 ins Parkhaus transportiert. Daran anschließend soll eine in einer unteren Führungsebene gelagerte Leerpalette 4 für die Einfahrt des nächsten Pkw in die obere Führungsebene versetzt werden. Hierzu wird die Leerpalette 4 von einer Hubvorrichtung 5 leicht angehoben und die aus an dem Boden 1 schwenkbar gelagerten U-Profilschienen 6 gebildeten übereinander vorgesehenen Führungsebenen zur Seite gekippt. Es wird dann die Leerpalette 4 mit der Hubvorrichtung 5 so weit angehoben, das die U-Profilschienen 6 über Gelenke 7 mit Hilfe von Bewegungselementen 8 zurückgeschwenkt werden können. Beim Absenken der Hubvorrichtung 5 setzt die Leerpalette 4 auf den U-Profilschienen 6 auf. Die Leerpalette 4 wird nunmehr zu einer von einem Pkw befahrenen Palette. Zur Längsarretierung der Paletten, sowie zum Abfangen der Pkw-Rollkräfte ist an den in Richtung des Parkhauses befindlichen Enden der U-Profilschienen 6 ein verstärkter Bereich 9 des Rolltores 3 vorgesehen, der über Rollelemente 10 in einer verstärkten Senkrechtführung 11 gelagert ist. Zum Zweck einer Prallwand für den Pkw ist der verstärkte Rolltorbereich 9 derart ausgebildet, das er sich über die Höhe der Palettenanordnung hinaus erstreckt und zweckmäßigerweise oberhalb der Höhe von Pkw-Stoßstangen endet.

## Patentansprüche

1. Doppelpalettensystem zum Verteilen und Lagern von Gütern, wie Fahrzeuge, Container oder dergleichen in Lagern, insbesondere von Kraftfahrzeugen in Parkhäusern, mit zwei übereinander vorgesehenen Führungsebenen für die Horizontalverschiebung der Paletten, wobei die obere Führungsebene für mit einem Fördergut bestückte Paletten und die untere Führungsebene für Leerpaletten vorgesehen ist, wobei jeweils zwei übereinander vorgesehene Führungsebenen aus einer Schwenkbaren Profilschiene (6) gebildet sind dadurch gekennzeichnet, daß die Profilschiene schwenkbar gelagert und unterhalb der Paletten eine Hubvorrichtung (5) vorgesehen ist.

2. Doppelpalettensystem nach Anspruch 1,
dadurch gekennzeichnet, daß
an den in Richtung Lager befindlichen Enden der Profilschiene (6) eineverstärkter Bereich (9) eines Rolltores vorgesehen ist.

3. Doppelpalettensystem nach Anspruch 2,
dadurch gekennzeichnet, daß
der verstärkte Rolltorbereich (9) über Roll- oder Gleitelemente (10) in einer verstärkten Senkrechtführung (11) gelagert ist.

4. Doppelpalettensystem nach Anspruch 2 oder 3,
dadurch gekennzeichnet, daß
sich der verstärkte Rolltorbereich (9) über die Höhe der Palettenanordnung hinaus erstreckt.

## Claims

1. Double pallet system for distributing and storing articles, such as vehicles, containers or the like in storage areas, more especially automotive vehicles in multi-storey car parks, including two guide surfaces which are provided one above the other for the horizontal displacement of the pallets, the upper guide surface being provided for pallets provided with an article for conveyance and the lower guide surface being provided for empty pallets, each of the two guide surfaces, which are provided one above the other, being formed from a profile rail (6), characterised in that the profile rail is pivotably mounted, and a lifting apparatus (5) is provided beneath the pallets.

2. Double pallet system according to claim 1, characterised in that a reinforced region (9) of a sliding door is provided on the ends of the profile rails (6) situated in the direction towards the storage area.

3. Double pallet system according to claim 2, characterised in that the reinforced sliding door region (9) is mounted in a reinforced vertical guide means (11) via rolling or sliding elements (10).

4. Double pallet system according to claim 2 or 3, characterised in that the reinforced sliding door region (9) extends beyond the height of the pallet arrangement.

## Revendications

1. Système de palettes doubles pour répartir et entreposer des produits comme des véhicules, des conteneurs, etc. dans des entrepôts, en particulier des automobiles dans des parkings à étages, comportant deux plans de guidage superposés pour le déplacement horizontal des palettes, le plan de guidage supérieur étant prévu pour les palettes chargées d'un produit à transporter, tandis que le plan de guidage inférieur est prévu pour les palettes vides, étant précisé que deux plans de guidage superposés sont formés à partir d'un rail profilé, caractérisé en ce que le rail profilé (6) est monté pivotant et un dispositif de levage (5) est prévu au-dessous des palettes.

2. Système de palettes doubles selon la revendication 1, caractérisé en ce qu'une zone renforcée (9) d'une porte roulante est prévue aux extrémités des rails profilés (6) tournées vers l'entrepôt.

3. Système de palettes doubles selon la revendication 2, caractérisé en ce que la zone de porte roulante renforcée (9) est montée par l'intermédiaire d'éléments de roulement ou de glissement (10) dans un guidage vertical renforcé (11).

4. Système de palettes doubles selon la revendication 2 ou 3, caractérisé en ce que la zone de porte roulante renforcée (9) dépasse de la hauteur du dispositif de palettes.
